# EUROPÄISCHE PATENTANMELDUNG

(11) **EP 2 052 913 A1**
(43) Veröffentlichungstag der Anmeldung: **29.04.2009**
(21) Anmeldenummer: 08018018.5
(22) Anmeldetag: 15.10.2008
(51) Int. Cl.: B60R 9/045

(54) **Gepäckträger für ein Fahrzeug**

(30) Priorität: 24.10.2007 DE 102007050646
(71) Anmelder: GM Global Technology Operations, Inc., Detroit, MI 48265-3000 (US)
(72) Erfinder: Dönicke, Daniel, 64646 Heppenheim (DE)
(74) Vertreter: Spitzfaden, Ralf

(57) **Zusammenfassung**

Die Erfindung betrifft einen Gepäckträger für ein Fahrzeug, insbesondere einen Dachgepäckträger, umfassend einen ersten Längsträger (1), einen zweiten Längsträger (2) und wenigstens einen Querträger (3), wobei der Querträger (3) derart an dem ersten Längsträger (1) angelenkt ist, dass er zwischen einer Längsstellung, in der er parallel zu einem ersten Längsträger (1) verläuft, und einer Querstellung verschwenkbar ist, in der er den ersten Längsträger (1) mit dem zweiten Längsträger (2) verbindet. Erfindungsgemäß ist vorgesehen, dass die Anlenkung des Querträgers (3) an dem ersten Längsträger (1) derart ausgestaltet ist, dass der Querträger (3) in Richtung seiner Schwenkachse (5) zwischen einer Arretierstellung und einer Schwenkstellung beweglich gelagert ist, wobei der Querträger (3) nur in der Schwenkstellung verschwenkbar ist. Auf diese Weise wird ein einfach und verlässlich bedienbares System für einen Gepäckträger bereitgestellt, dass eine einfache Montage und Demontage eines Querträgers zur Aufnahme von Lasten erlaubt.

## Beschreibung

Die Erfindung betrifft einen Gepäckträger für ein Fahrzeug, insbesondere einen Dachgepäckträger, umfassend einen ersten Längsträger, einen zweiten Längsträger und wenigstens einen Querträger, wobei der Querträger derart an dem ersten Längsträger angelenkt ist, dass er zwischen einer Längsstellung, in der er parallel zu dem ersten Längsträger verläuft, und einer Querstellung verschwenkbar ist, in der er den ersten Längsträger mit dem zweiten Längsträger verbindet. Ein derartiger Gepäckträger ist aus der DE 10 2004 032 751 A1 bekannt.

Heutzutage weisen viele Fahrzeuge, insbesondere Kombis und SUVs, eine Dachreling auf, an der verschiedene Arten von Gepäckträgern befestigt werden können. Solche Gepäckträger weisen im Allgemeinen Querträger auf, deren Enden an der Dachreling befestigt werden. Die Befestigung der Querträger an der Dachreling ist jedoch relativ aufwendig, und im Übrigen müssen entsprechende Dachgepäckträger separat bereitgestellt werden, so dass der Transport und insbesondere die Aufbewahrung derartiger Dachgepäckträger aufwendig sind.

Mitunter bedeutet dies, dass ein einmal montierter Dachgepäckträger nach seiner Benutzung nicht unmittelbar wieder demontiert wird, sondern auf der Dachreling verbleibt. Neben unangenehmen Windgeräuschen führt dies jedoch insbesondere zur Erhöhung des Luftwiderstands des Fahrzeugs und damit zu einer Erhöhung des Kraftstoffverbrauchs.

Damit ist es die Aufgabe der Erfindung, einen derartigen Gepäckträger für ein Fahrzeug anzugeben, der einfach transportiert und aufbewahrt und insbesondere einfach montiert und demontiert werden kann.

Ausgehend von dem eingangs beschriebenen Gepäckträger ist diese Aufgabe dadurch gelöst, dass die Anlenkung des Querträgers an dem ersten Längsträger derart ausgestaltet ist, dass der Querträger in Richtung seiner Schwenkachse zwischen einer Arretierstellung und einer Schwenkstellung beweglich gelagert ist, wobei der Querträger nur in der Schwenkstellung verschwenkbar ist.

Erfindungsgemäß ist also vorgesehen, dass der Querträger zwischen einer Schwenkstellung und einer Arretierstellung längs der Schwenkachse, die im Allgemeinen im Wesentlichen der Fahrzeug-Hochachse entspricht, beweglich ist. Ein Verschwenken des Querträgers um die Schwenkachse ist jedoch nur in der Schwenkstellung möglich, während die Arretierstellung dazu dient, eine Verschwenkung des Querträgers auszuschließen.

Wie weiter unten im Detail beschrieben, ermöglicht dies auf einfache Weise, einen Querträger als Teil eines fest installierten Gepäckträgers eines Fahrzeugs auf gesicherte Weise, nämlich in der Arretierstellung, immer mitzuführen und nur bei Bedarf auszuschwenken, indem der Querträger nämlich längs seiner Schwenkachse in die Schwenkstellung verbracht und in dieser derart ausgeschwenkt ist, dass er mit dem zweiten Längsträger in Kontakt treten und damit diesen mit dem ersten Längsträger verbinden kann, so dass insgesamt ein beidseitig stabil gelagerter Querträger erzielt wird, der in übliche Weise Lasten aufnehmen kann.

In der Arretierstellung ist der Querträger dahingehend arretiert, dass er keine Schwenkbewegung um seine Schwenkachse ausführen kann. Gemäß einer bevorzugten Weiterbildung der Erfindung ist ferner eine Arretiereinrichtung vorgesehen, mittels derer der Querträger in der Arretierstellung arretierbar ist. Diese Arretiereinrichtung gewährleistet damit, dass im arretierten Zustand des Querträgers auch keine Bewegung längs der Schwenkachse erfolgen kann, was eine zusätzliche Sicherung des Querträgers bedeutet. Erst nach Lösen der Arretiereinrichtung kann nämlich der Querträger in die Schwenkstellung verbracht werden, in der er dann tatsächlich eine derartige Schwenkbewegung ausführen kann, mittels derer er in eine Stellung gebracht wird, in der er die beiden Längsträger im Sinne eines herkömmlichen Querträgers miteinander verbindet.

Grundsätzlich kann vorgesehen sein, dass der Querträger zur Überführung von seiner Arretierstellung in die Schwenkstellung von einem Verwender von Hand angehoben werden muss. Gemäß einer bevorzugten Weiterbildung der Erfindung ist jedoch eine Hebevorrichtung vorgesehen, mittels derer der Querträger nach Lösen der Arretiereinrichtung automatisch von der Arretierstellung in die Schwenkstellung anhebbar ist. Insbesondere kann die Arretiereinrichtung z. B. einen Knopf aufweisen, um die Arretierstellung zu lösen und die Bewegbarkeit des Querträgers längs der Schwenkachse zu ermöglichen.

Gemäß einer bevorzugten Weiterbildung der Erfindung ist dabei ferner vorgesehen, dass die Hebevorrichtung eine Feder, vorzugsweise eine Spiralfeder aufweist, deren Vorspannung durch Lösen des Knopfes gelöst wird, so dass es dadurch zu einem automatischen Anheben des Querträgers kommt. In diesem Zusammenhang ist es gemäß einer bevorzugten Weiterbildung der Erfindung ferner vorgesehen, dass die Arretiereinrichtung derart ausgebildet ist, dass der Querträger durch Herunterdrücken von der Schwenkstellung in die Arretierstellung in dieser arretierbar ist.

Grundsätzlich kann es möglich sein, den Querträger in jeder beliebigen Schwenkstellung arretieren zu können. Gemäß einer bevorzugten Weiterbildung der Erfindung ist jedoch vorgesehen, dass die Arretiereinrichtung derart ausgebildet ist, dass der Querträger jeweils nur in seiner Längsstellung arretierbar ist.

Das bedeutet, dass der Querträger nur dann hinsichtlich seiner Bewegbarkeit längs der Schwenkachse arretiert werden kann, wenn er vollständig aus- bzw. eingeschwenkt ist, sich also entweder in seiner Längsstellung befindet, in der er parallel zum ersten Längsträger verläuft, vorzugsweise in diesen integriert ist, oder in seiner Querstellung, in der er den ersten Längsträger mit dem zweiten Längsträger verbindet und die damit die Laststellung darstellt. Diese bevorzugte Weiterbildung der Erfindung ist insbesondere insofern vorteilhaft, also dass keine dahingehenden Bedienerfehler auftreten können, bei denen der Querträger nicht vollständig ein- bzw. ausgeschwenkt ist.

Grundsätzlich kann es ausreichend sein, die Bewegbarkeit des Querträgers durch die zuvor beschriebene Arretiereinrichtung zu steuern. Gemäß einer bevorzugten Weiterbildung der Erfindung ist jedoch vorgesehen, dass der Querträger an seinem von der Schwenkachse entfernten Ende ein Fixierelement aufweist. Dabei ist es gemäß einer bevorzugten Weiterbildung der Erfindung ferner vorgesehen, dass der erste Längsträger eine mit dem Fixierelement des Querträgers zusammenwirkende Längsfixiereinrichtung aufweist, mittels derer der Querträger an dem ersten Längsträger in Längsstellung fixierbar ist. Gemäß einer bevorzugten Weiterbildung der Erfindung ist ferner vorgesehen, dass der zweite Längsträger eine mit dem Fixierelement des Querträger zusammenwirkende Querfixiereinrichtung aufweist, mittels derer der Querträger an dem zweiten Längsträger in Querstellung fixierbar ist.

Im Ergebnis kann damit eine derartige Konstruktion erzielt werden, die einerseits eine Arretierung des Querträgers hinsichtlich einer Bewegung längs der Schwenkachse ermöglicht und darüber hinaus im vollständig ein- bzw. ausgeschwenkten Zustand des Querträgers gewährleistet, dass auch das andere Ende des Querträgers an seinem Anschlagpunkt am ersten Längsträger bzw. am zweiten Längsträger fixiert ist. Insgesamt wird damit eine stabile Konstruktion erzielt, deren Tragkraft einem herkömmlichen Gepäckträger entsprechen kann.

Grundsätzlich ist ein Gepäckträger denkbar, der lediglich einen auf zuvor beschriebene Weise verschwenkbaren Querträger aufweist. Gemäß einer bevorzugten Weiterbildung der Erfindung ist jedoch vorgesehen, dass an dem ersten Längsträger und an dem zweiten Längsträger jeweils wenigstens ein Querträger angelenkt ist. Ganz besonders ist in diesem Zusammenhang bevorzugt, dass an dem ersten Längsträger und an dem zweiten Längsträger jeweils genau ein Querträger angelenkt ist, wodurch ein Gepäckträger erzielt wird, der genau zwei Querträger aufweist, die parallel zueinander verlaufen können und damit eine stabile und verlässliche Auflage für zu transportierende Lasten bereitstellen.

Der zuvor beschriebene Gepäckträger kann an verschiedenen Orten auf einem Fahrzeug angeordnet sein, wie auf dem Kofferraumdeckel und/oder auf der Motorhaube eines Fahrzeugs. Gemäß einer bevorzugten Weiterbildung der Erfindung ist jedoch die Verwendung des zuvor beschriebenen Gepäckträgers als Dachgepäckträger auf einem Fahrzeugdach vorgesehen. Hier kommt der zuvor angesprochene Vorteil hinsichtlich der Vermeidung eines hohen Luftwiderstands bei nicht benötigtem Gepäckträger zu besonderer Bedeutung, da Dachaufbauten den Luftwiderstand eines Fahrzeugs stärker beeinflussen als Einrichtungen auf der Motorhaube bzw. auf dem Kofferraumdeckel.

Nachfolgend wird die Erfindung unter Bezugnahme auf die Zeichnung anhand bevorzugter Ausführungsbeispiele der Erfindung im Einzelnen erläutert.

### In der Zeichnung zeigt:

- Fig. 1: schematisch einen Gepäckträger gemäß einem bevorzugten Ausführungsbeispiel der Erfindung,
- Fig. 2a, b: die Ausgestaltung eines Längsträgers mit einem Querträger gemäß einem weiteren bevorzugten Ausführungsbeispiel der Erfindung und
- Fig. 3a, b, c: einen Längsträger mit einem Querträger gemäß einem dritten bevorzugten Ausführungsbeispiel der Erfindung.

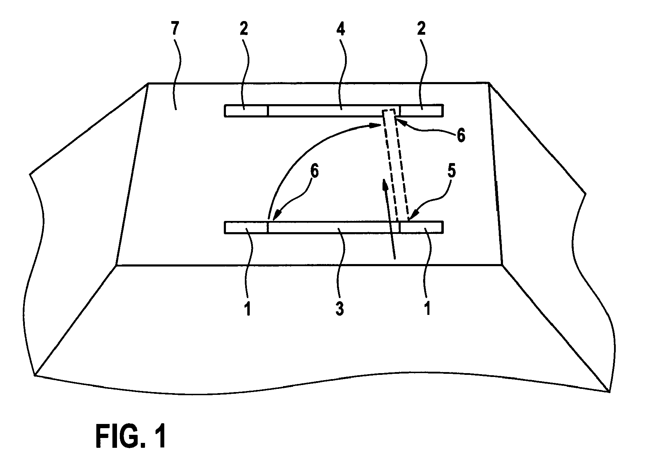

Aus Fig. 1 ist schematisch die grundsätzliche Funktion eines Gepäckträgers gemäß einem bevorzugten Ausführungsbeispiel der Erfindung ersichtlich. Der vorliegend beschriebene Gepäckträger ist als Dachgepäckträger auf einem schematisch dargestellten Fahrzeugdach 7 eines nicht weiter dargestellten Fahrzeugs vorgesehen. Die Funktionsweise sei exemplarisch anhand des ersten Längsträgers 1 zusammen mit dem ersten Querträger 3 beschrieben.

In einem Zustand, in dem der erste Querträger 3 noch eingeschwenkt ist, also noch nicht zur Aufnahme von Lasten vorgesehen ist, ist dieser vollständig in den ersten Längsträger 1 integriert und damit vollständig in dessen Richtung orientiert. Um nun von dieser Längsstellung in die zur Aufnahme von Lasten geeignete Querstellung zu gelangen, muss der erste Querträger 2 längs seiner Schwenkachse 5, die vorliegend der Fahrzeug-Hochachse entspricht, bewegt werden, so dass er von einer Arretierstellung in eine Schwenkstellung gelangt. Während der erste Querträger 3 in der Arretierstellung nicht verschwenkbar ist, kann er nun in der durch Anheben erreichten Schwenkstellung ausgeschwenkt werden, so dass sein von der Schwenkachse 5 beabstandetes Ende 6 in Kontakt mit dem zweiten Längsträger 2 treten kann.

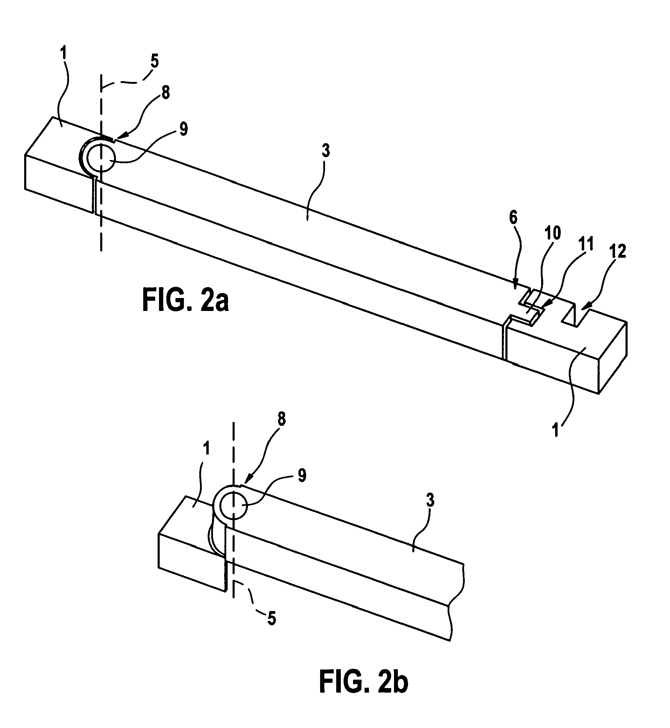

Wie nun die Konstruktion eines Gepäckträgers zur Realisierung dieser Funktion ausgestaltet sein kann, wird nachfolgend anhand weiterer bevorzugter Ausführungsbeispiele der Erfindung erläutert. Dabei ist aus den Fig. 2a und 2b gemäß einem weiteren bevorzugten Ausführungsbeispiel ersichtlich, wie der erste Querträger 3 in seiner Längsstellung vollständig in den ersten Längsträger 1 eines Gepäckträgers integriert ist. Im Bereich der Schwenkachse 5 ist eine Arretiereinrichtung 8 vorgesehen, die einen Knopf 9 und eine darunter angeordnete, in der Zeichnung nicht dargestellte Hebevorrichtung mit einer Feder aufweist, so dass folgende Funktion erzielbar ist:

Durch Drücken des Knopfes 9 wird die Arretiereinrichtung 8 gelöst, so dass der erste Querträger 3 längs der Schwenkachse 5 von seiner Arretierstellung in seine Schwenkstellung überführbar ist. Dieses Anheben des ersten Querträgers 3 erfolgt gemäß dem vorliegend beschriebenen bevorzugten Ausführungsbeispiel der Erfindung automatisch, nämlich mit Hilfe der nicht weiter dargestellten, unter dem Knopf 9 angeordneten Feder, die beim Lösen der Arretiereinrichtung 8 den ersten Querträger 3 automatisch anhebt. Wie insbesondere aus Fig. 2b ersichtlich, wird der erste Querträger 3 dabei zumindest soweit angehoben, dass ein Ausschwenken aus der Längsrichtung ermöglicht wird.

Zur Fixierung des ersten Querträgers 3 in seiner vollständig ausgeschwenkten Stellung, also in seiner Querstellung, weist dieser an seinem der Schwenkachse 5 abgewandten Ende 6 ein Fixierelement 10 in Form eines hervorstehenden Bereichs auf. Mit diesem Fixierelement 10 wird eine Fixierung in der Längsstellung erreicht. Dazu ist der erste Längsträger 1, wie auch der zweite, hier nicht dargestellte Längsträger 2, der symmetrisch zum ersten Längsträger 1 aufgebaut und angeordnet ist, mit einer Längsfixiereinrichtung 11 sowie einer Querfixiereinrichtung 12 ausgestattet, und zwar, wie aus Fig. 2a ersichtlich, in Form von jeweiligen Ausnehmungen, die mit dem Fixierelement 10 an dem der Schwenkachse 5 des ersten Querträgers 3 abgewandten Endes 6 zusammenwirken.

Ist der erste Querträger 3 vollständig ausgeschwenkt, so kann er von einem Verwender durch Herunterdrücken arretiert werden, so dass ohne Lösen der Arretiereinrichtung 8 keine Bewegung längs der Schwenkachse 5 und damit auch kein Verschwenken mehr möglich ist. Im Übrigen wird an dem der Schwenkachse 5 abgewandten Ende 6 des ersten Querträgers 3 eine Fixierung dadurch erzielt, dass das Fixierelement 10, entsprechend der Situation in der Längsstellung, nun auch in der Querstellung anstatt mit der Längsfixiereinrichtung 11 des ersten Längsträgers 1 mit der Querfixiereinrichtung 12 des zweiten Längsträgers 2 zusammenwirkt.

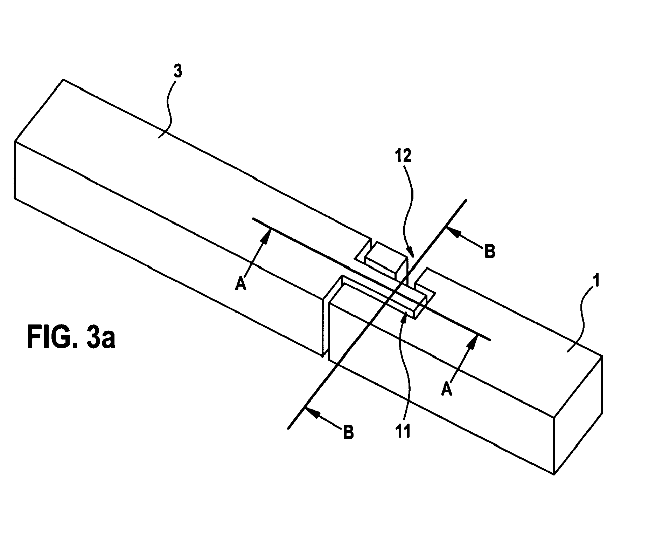

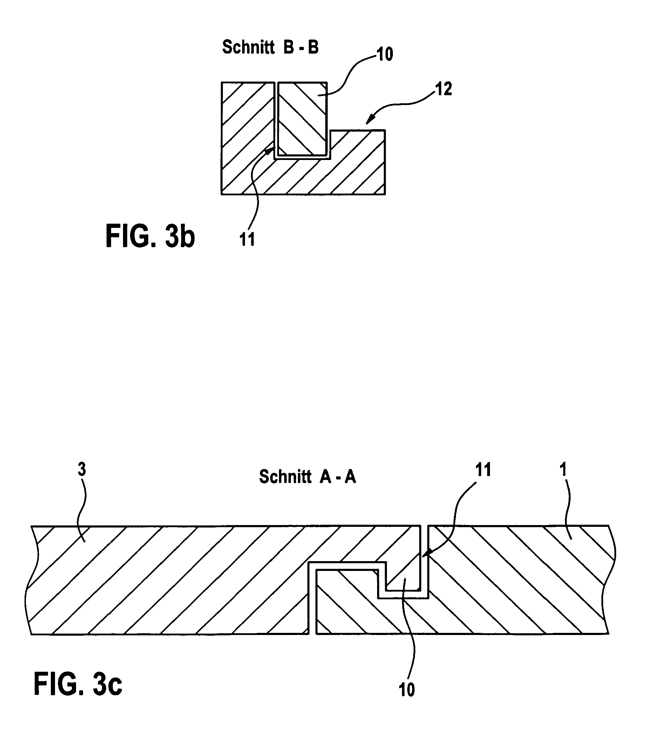

Aus den Fig. 3a, 3b und 3c ist ein weiteres Ausführungsbeispiel eines Gepäckträgers gemäß einem bevorzugten Ausführungsbeispiel der Erfindung ersichtlich. Während bei dem zuvor beschriebenen Ausführungsbeispiel die Querfixiereinrichtung 12 im Abstand von der Längsfixiereinrichtung 11 angeordnet gewesen ist, ist vorliegend vorgesehen, dass die Längsfixierreinrichtung 11 und die Querfixiereinrichtung 12 ineinander integriert sind. Auf diese Weise kann eine symmetrische Anordnung erzielt werden, gemäß der der Abstand der Querträger 3, 4 voneinander in der Querstellung ihrem Abstand in der Längsstellung entspricht, der im Übrigen auch dem Abstand des ersten Längsträgers 1 vom zweiten Längsträger 2 entspricht. Im Gegensatz dazu ist gemäß dem zuvor beschriebenen bevorzugten Ausführungsbeispiel der Erfindung ein größerer Abstand der beiden Querträger 3, 4 voneinander in deren Querstellung möglich, so dass z. B. ein längerer Bereich des Fahrzeugsdachs 7 ausgenutzt werden kann.

Im Ergebnis wird damit ein insbesondere auch als Dachgepäckträger für ein Fahrzeug einsetzbarer Gepäckträger bereitgestellt, der auf einfache und verlässliche Weise von einem Transportzustand, in dem die Querträger 3, 4 in Längsstellung angeordnet sind, in einen Lastzustand überführt werden kann, in dem sie in einer Querstellung angeordnet sind, so dass sie in üblicher Weise Lasten tragen können. Insbesondere ist die Überführung der Querträger von ihrer Längsstellung in die Querstellung sehr einfach und verlässlich handhabbar, da sie nach Lösen der Arretiereinrichtung 8 automatisch von einer Arretierstellung, in der kein Verschwenken möglich ist, in eine Schwenkstellung überführt werden, in der sie ausgeschwenkt und dann mit ihren von der Schwenkachse 5 beabstandeten Enden 6 jeweils mit einem dort vorgesehen Fixierelement 10 in einer Querfixiereineinrichtung 12 fixiert werden können.

### Bezugszeichenliste

- 1: erster Längsträger
- 2: zweiter Längsträger
- 3: erster Querträger
- 4: zweiter Querträger
- 5: Schwenkachse
- 6: Ende des ersten Querträgers
- 7: Fahrzeugdache
- 8: Arretiereinrichtung
- 9: Knopf
- 10: Fixierelement
- 11: Längsfixiereinrichtung
- 12: Querfixiereinrichtung

## Patentansprüche

1. Gepäckträger für ein Fahrzeug,
umfassend einen ersten Längsträger (1), einen zweiten Längsträger (2) und wenigstens einen Querträger (3),
wobei der Querträger (3) derart an dem ersten Längsträger (1) angelenkt ist, dass er zwischen einer Längsstellung, in der er parallel zu dem ersten Längsträger (1) verläuft, und einer Querstellung verschwenkbar ist, in der er den ersten Längsträger (1) mit dem zweiten Längsträger (2) verbindet,
**dadurch gekennzeichnet, dass**
die Anlenkung des Querträgers (3) an dem ersten Längsträger (1) derart ausgestaltet ist, dass der Querträger (3) in Richtung seiner Schwenkachse (5) zwischen einer Arretierstellung und einer Schwenkstellung beweglich gelagert ist, wobei der Querträger (3) nur in der Schwenkstellung verschwenkbar ist.

2. Gepäckträger nach Anspruch 1, **dadurch gekennzeichnet, dass** eine Arretiereinrichtung (8) vorgesehen ist, mittels derer der Querträger (3) in der Arretierstellung arretierbar ist.

3. Gepäckträger nach Anspruch 1 oder 2, **dadurch gekennzeichnet, dass** eine Hebevorrichtung vorgesehen ist, mittels derer der Querträger (3) nach Lösen der Arretiereinrichtung (8) automatisch von der Arretierstellung in die Schwenkstellung anhebbar ist.

4. Gepäckträger nach Anspruch 3, **dadurch gekennzeichnet, dass** die Hebevorrichtung eine Feder, vorzugsweise eine Spiralfeder, aufweist.

5. Gepäckträger nach Anspruch 3 oder 4, **dadurch gekennzeichnet, dass** die Arretiereinrichtung (8) derart ausgebildet ist, dass der Querträger (3) durch Herunterdrücken von der Schwenkstellung in die Arretierstellung in dieser arretierbar ist.

6. Gepäckträger nach Anspruch 5, dass die Arretiereinrichtung (8) derart ausgebildet ist, dass der Querträger (3) jeweils nur in seiner Längsstellung und in seiner Querstellung arretierbar ist.

7. Gepäckträger nach einem der Ansprüche 1 bis 6, **dadurch gekennzeichnet, dass** der Querträger (3) an seinem von der Schwenkachse (5) entfernten Ende (6) ein Fixierelement (10) aufweist.

8. Gepäckträger nach Anspruch 7, **dadurch gekennzeichnet, dass** der erste Längsträger (1) eine mit dem Fixierelement (10) des Querträgers (3) zusammenwirkende Längsfixiereinrichtung (11) aufweist, mittels der der Querträger (3) an dem ersten Längsträger (1) in Längsstellung fixierbar ist.

9. Gepäckträger nach Anspruch 7 oder 8, **dadurch gekennzeichnet, dass** der zweite Längsträger (2) eine mit dem Fixierelement (10) des Querträgers (3) zusammenwirkende Querfixiereinrichtung (12) aufweist, mittels derer der Querträger (3) an dem zweiten Längsträger (2) in Querstellung fixierbar ist.

10. Gepäckträger nach einem der Ansprüche 1 bis 9, **dadurch gekennzeichnet, dass** an dem ersten Längsträger (1) und an dem zweiten Längsträger (2) jeweils ein Querträger (3, 4) angelenkt ist.

11. Verwendung eines Gepäckträgers nach einem der Ansprüche 1 bis 10 als Dachgepäckträger auf einem Fahrzeugdach (7).

12. Fahrzeug mit einem Gepäckträger nach einem der Ansprüche 1 bis 10.
